# EUROPEAN PATENT APPLICATION

(11) **EP 1 496 429 A2**
(43) Date of publication of application: **12.01.2005**
(21) Application number: 04103234.3
(22) Date of filing: 08.07.2004
(51) Int. Cl.: G06F 3/12

(54) **Network printing**

(30) Priority: 09.07.2003 KR 2003046322
(71) Applicant: Samsung Electronics Co., Ltd., Suwon-si, Gyeonggi-Do 442-742 (KR)
(72) Inventor: Ha, Jung-hyung, Gyeonggi-do (KR)
(74) Representative: Read, Matthew Charles

(57) **Abstract**

A method and apparatus to control printing of printers connected with a network and a computer-readable recording medium to store a computer program are provided. The method includes finding and registering identification information that identifies universal plug-and-play printers supporting universal plug-and-play among the printers connected with the network, monitoring the universal plug-and-play printers using the registered identification information, and selectively transmitting printing data to desired universal plug-and-play printers among the universal plug-and-play printers.

## Description

The present invention relates to method of printing a document using a plurality of network-connected printers.

An apparatus for controlling network printing is disclosed in JP-A-2000-207157. This apparatus broadcasts printing data to a plurality of printers. Then, each printer connected with the apparatus via a network receives the printing data, and prints out the printing data.

However, such apparatuses merely transmit the same printing data to all the printers connected via the network and cannot transmit different printing data to different printers. In addition, the printing data is transmitted to the printers, connected via the network, once and cannot be retransmitted to a particular printer when transmission to or a printing operation of the particular printer fails. Moreover, such apparatuses cannot manage printers connected thereto via a network, cannot detect the state of each printer and cannot selectively transmit printing data to a particular printer. Furthermore, such apparatuses require a user to manually register identification information of each printer connected thereto via a network, thereby inconveniencing the user.

An aspect of the present invention provides a method to control network printing of printers, which are connected via a network, and to support universal plug-and-play (UPnP).

An aspect of the present invention also provides an apparatus to control network printing of printers, which are connected via a network, and to support UPnP.

An aspect of the present invention provides a computer-readable recording medium to store a computer program to control network printing of printers, which are connected via a network, and to support UPnP.

Additional aspects and/or advantages of the invention will be set forth in part in the description which follows and, in part, will be obvious from the description, or may be learned by practice of the invention.

According to an aspect of the present invention, a method to control printing operations of printers connected with a network is provided. The method comprises: determining and registering identification information to identify UPnP printers that support UPnP among the printers connected with the network, and monitoring the UPnP printers using the registered identification information and selectively transmitting printing data to desired UPnP printers among the UPnP printers.

According to another aspect of the present invention, an apparatus to control printing operations of printers connected with a network is provided. The apparatus comprises: an identification information registering unit to determine and to register identification information to identify UPnP printers that support UPnP among the printers connected with the network, and a printer monitoring unit to monitor the UPnP printers using the registered identification information received from the identification information registering unit and to selectively transmit printing data to desired UPnP printers among the UPnP printers.

According to another aspect of the present invention, a computer-readable recording medium to store at least one computer program readable by a computer to perform a method of controlling an apparatus that controls printing operations of printers connected with a network is provided. The method of the computer program comprises: determining and registering identification information to identify UPnP printers that support UPnP among the printers connected with the network, and monitoring the UPnP printers using the registered identification information and selectively transmitting printing data to desired UPnP printers among the UPnP printers.

Embodiments of the present invention will now be described, by way of example, with reference to the accompanying drawings, in which:
Figure 1 is a flowchart of a method of controlling network printing according to the present invention;
Figure 2 is a block diagram for explaining the method shown in Figure 1;
Figure 3 is a flowchart of operation 10 shown in Figure 1;
Figure 4 is a flowchart of operation 12 shown in Figure 1;
Figure 5 is a flowchart of operation 12 shown in Figure 1;
Figure 6 is a block diagram of an apparatus for controlling network printing;
Figure 7 is a block diagram of the identification information registering unit shown in Figure 6;
Figure 8 is a block diagram of a first embodiment of the printer monitoring unit shown in Figure 6;
Figure 9 is a block diagram of a second embodiment of the printer monitoring unit shown in Figure 6; and
Figure 10 is a block diagram of a third embodiment of the printer monitoring unit shown in Figure 6.

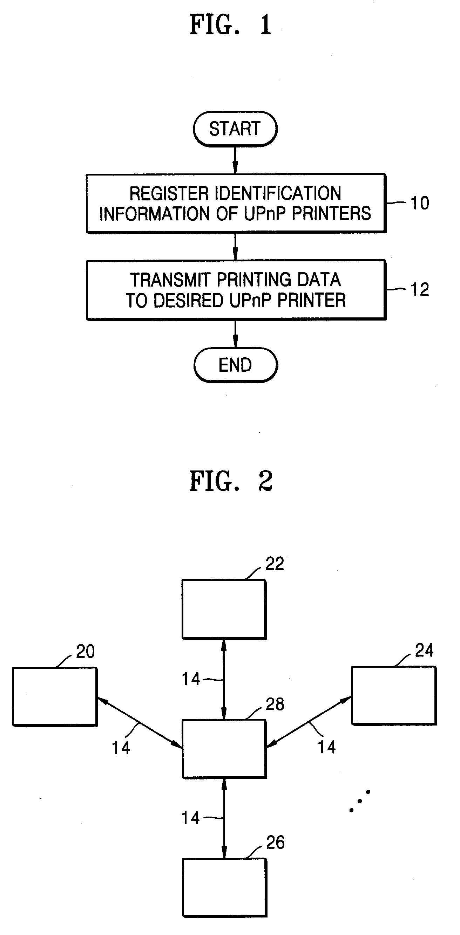

Referring to Figure 1, a method of controlling network printing, according to the present invention, includes printing data using printers that support universal plug-and-play (UPnP) in operations 10 and 12. Standards for UPnP are promulgated by the UPnP Forum and generally enable data communication between any of a plurality of devices under the command of a control device on the network and is a protocol independent of operating system, programming language and physical medium. For printers, the UPnP standard is Printer Device v.1.0 and Printer Basic Service v.1.01, the disclosure of which are incorporated by reference. However, it is understood that other types of network architectures of a similar nature, both open and closed, may be used.

Referring to Figure 2, reference numeral 14 denotes a network connection, reference numerals 20, 22, 24 and 26 denote printers and reference numeral 28 denotes a network printing control apparatus.

The network 14 shown in Figure 2 is a home network or a local network. While the network 14 is described in terms of a home or local network, the present invention can be used in various types of networks including both wired and wireless networks as well as the Internet and intranets. The network printing control apparatus 28 is referred to as a control point (CP) and may be a desktop computer, a notebook computer, a personal digital assistant (PDA) or other similar device.

The method of controlling network printing is used to control printing operations of UPnP-supporting printers among the printers 20, 22, 24, 26, connected by the network 14. The control of printing operations of the UPnP printers is performed by the network printing control apparatus 28.

Identification information, identifying the UPnP-supporting printers among the printers 20, 22, 24, 26, is determined and registered in operation 10. The identification information is settable and/or changeable by a user or a printer manufacturer.

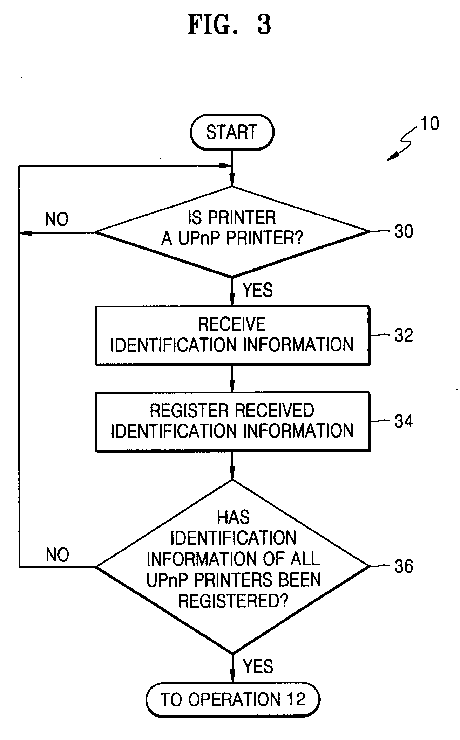

Referring to Figure 3, operation 10 includes determining and registering identification information for each of the UPnP printers, in operations 30 through 36. It is determined whether a printer 20, 22, 24, 26, connected to the network 14 is a UPnP printer in operation 30. Upon determining that a printer 20, 22, 24, 26 is not a UPnP printer, operation 30 is repeated. However, upon determining that a printer is a UPnP printer, identification information is received from the UPnP printer 20, 22, 24, 26 in operation 32. The identification information from the UPnP printer 20, 22, 24, 26 is received using the UPnP protocol.

After operation 32, the identification information, received from the UPnP printer is registered in operation 34. Subsequently, it is determined whether identification information of all of the UPnP printers 20, 22, 24, 26, connected to the network 14, has been registered in operation 36. Upon determining that the identification information of all of the UPnP printers 20, 22, 24, 26, connected to the network 14, has been registered, operation 10, shown in Figure 3, ends and the process moves to operation 12 shown in Figure 1. However, upon determining that the identification information of all of the UPnP printers 20, 22, 24, 26, connected to the network 14, has not been registered, the process moves to operation 30 to register the identification information of the remaining UPnP printers.

Identification information is registered as shown in Figure 3 using a discovery function, associated with UPnP architecture, that allows the network printing control point 28 to search for UPnP printers and allows the UPnP printers 20, 22, 24, 26 to broadcast their services when the network printing control point and the UPnP printers 20, 22, 24, 26 are connected to the network 14.

After operation 10, the UPnP printers 20, 22, 24, 26 are monitored using the registered identification information and printing data is selectively transmitted to a desired printer 20, 22, 24, 26 in operation 12. Thus, the method of controlling network printing allows printing data, having different information, to be transmitted to individual UPnP printers 20, 22, 24, 26 and/or printing data, having the same information, to be transmitted to all of the UPnP printers 20, 22, 24, 26. The printing data includes various types of information, such as advertisements, weather, news, etc. For example, in the case where the printing data is an apartment block or building management fee, printers 20, 22, 24, 26 connected to the network 14 are printers installed in households of an apartment block or in offices of an office building, and the network printing control apparatus 28 is installed in a control room of the apartment block or the office building.

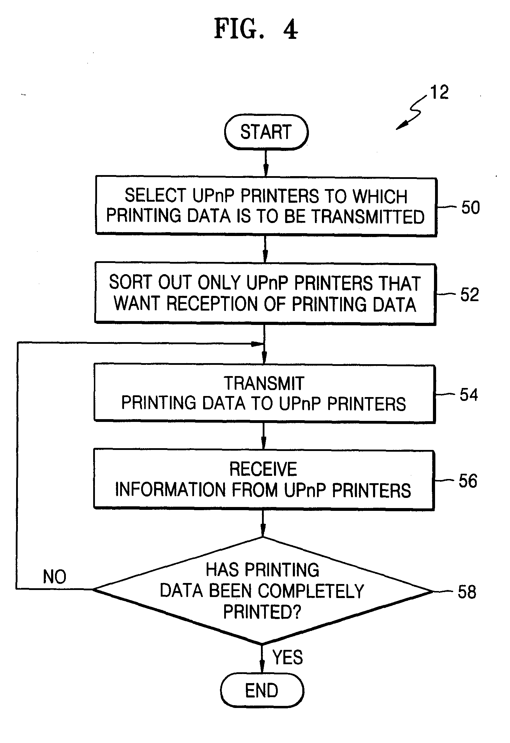

Referring to Figure 4, operation 12 includes transmitting the printing data to the desired UPnP printer 20, 22, 24, 26 in operations 50 through 54, and monitoring whether the printing data is printed correctly in operations 56 and 58.

Operation 12, shown in Figure 1, includes operations 50, 52 and 54, shown in Figure 4. UPnP printers 20, 22, 24, 26, to which printing data is to be transmitted, are selected in operation 50. After operation 50, only the UPnP printers 20, 22, 24, 26 wanting to receive the printing data are sorted out from the selected UPnP printers 20, 22, 24, 26, using the registered identification information in operation 52. In other words, when a UPnP printer 20, 22, 24, 26 reports in advance that it should not be sent the printing data, the printing data is not transmitted to that UPnP printer 20, 22, 24, 26, even if the UPnP printer 20, 22, 24, 26 has been selected as a destination printer for the printing data. After operation 52, the printing data is transmitted to only the sorted-out UPnP printers 20, 22, 24, 26 in operation 54.

In another embodiment, operation 12 shown in Figure 1 includes only operations 50 and 54 shown in Figure 4. Accordingly, UPnP printers to which the printing data is to be transmitted are selected in operation 50. After operation 50, the printing data is transmitted to the selected UPnP printers 20, 22, 24, 26 in operation 54.

In a further embodiment, operation 12 shown in Figure 1 includes operations 50 through 58 shown in Figure 4. Accordingly, at least one type of information among information regarding whether the printing data has been completely transmitted and information regarding whether the printing data has been completely printed is received from each UPnP printer 20, 22, 24, 26 in operation 56. The UPnP printers 20, 22, 24, 26 transmitting this information are the UPnP printers 20, 22, 24, 26 selected in operation 50 if operation 12, shown in Figure 4, does not include operation 52 and the UPnP printers 20, 22, 24, 26 sorted in operation 52 if operation 12, shown in Figure 4, includes operation 52.

After operation 56, it is determined whether printing has been completed correctly, based on the information received from the selected or sorted-out UPnP printers 20, 22, 24, 26, in operation 58. Upon determining that printing has not been completed correctly, the process returns to operation 54 for retransmission of the printing data to only the UPnP printer or printers 20, 22, 24, 26 that did not complete printing correctly. However, upon determining that printing has been completed correctly, operation 12, shown in Figure 4. ends.

For example, assuming that the printing data includes information transmitted to each household of an apartment block from a control room of the apartment block and the network printing control apparatus 28 monitors information shown in Table 1.

**TABLE 1**

| Registered UPnP printers | Current state of connection to network | State of request reception of printing data | Others |
|---|---|---|---|
| Printer in room 1 on the first floor of block A | Online | O | |
| Printer in room 2 on the first floor of block A | Online | O | |
| Printer in room 1 on the second floor of block Z | Offline | O | |
| Printer in room 2 on second floor of block Z | Online | X | |

Referring to Table 1 and Figure 1, identification information of the printers installed in rooms 1 and 2 on the first floor of block A and rooms 1 and 2 on the second floor of the block Z is registered in operation 10. As shown in Table 1, the printer installed in room 2 on the second floor of block Z has requested to not to be sent printing data in advance and the printer in room 1 on the second floor of block Z is not currently connected to the network in operation 12.

When the printers installed in rooms 1 and 2 on the first floor of block A and rooms 1 and 2 on the second floor of block Z are selected as printers to which printing data is to be transmitted in operation 50 shown in Figure 4, only the printers installed in rooms 1 and 2 on the first floor of block A and room 1 on the second floor of block Z are sorted out from the selected printers in operation 52 because the printer installed in room 2 on the second floor of block Z has requested not to be sent printing data. Then, the printing data is transmitted to the sorted-out printers installed in rooms 1 and 2 on the first floor of block A and room 1 on the second floor of block Z in operation 54.

Accordingly, information is received from the printers installed in rooms 1 and 2 on the first floor of block A and room 1 on the second floor of block Z in operation 56. Further, assuming that the printer installed in room 1 on the first floor of block A has completed printing correctly but the printers installed in room 2 on the first floor of block A and room 1 on the second floor of block Z have not completed printing correctly, as shown in Table 2.

**TABLE 2**

| Sorted-out UPnP printers | Printing result | Error message | Others |
|---|---|---|---|
| Printer in room 1 on first floor of block A | Normal | | |
| Printer in room 2 on first floor of block A | Failed | Out of paper | |
| Printer in room 1 on second floor of block Z | Failed | Offline | |

In this case, the printing data is selectively retransmitted to the printers installed in room 2 on the first floor of block A and room 1 on the second floor of block Z, which have not completed printing normally, in operation 54. According to an aspect of the present invention, results of printing the retransmitted printing data appears as shown in Table 3 below.

**TABLE 3**

| Failed UPnP printers | Printing result after retransmission | Others |
|---|---|---|
| Printer in room 2 on first floor of block A | Normal | |
| Printer in room 1 on second floor of block Z | Normal | |

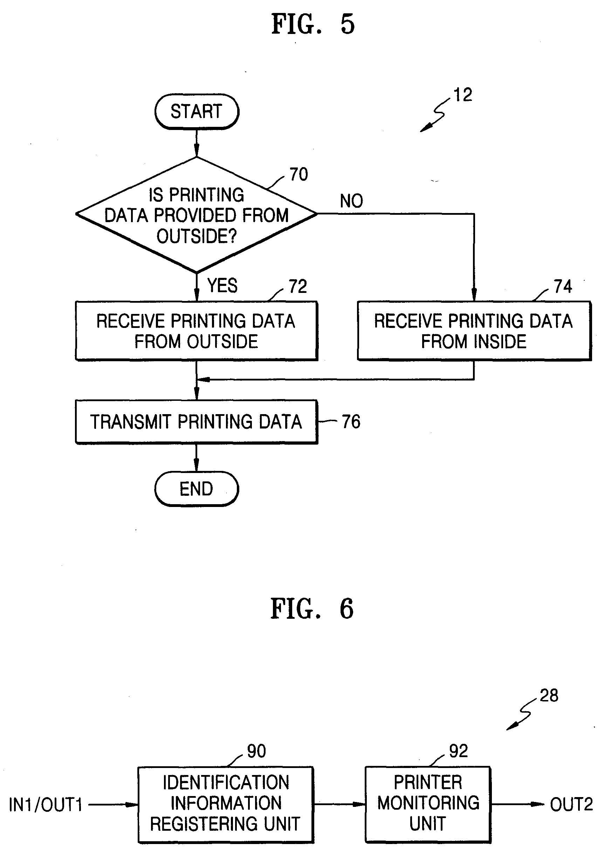

Referring to Figure 5, operation 12 includes operations to externally or internally receive printing data and transmit the printing data to the desired printers in operations 70 through 76.

As shown in Figure 5, it is determined whether the printing data is provided from outside the network printing control apparatus 28 in operation 70. Upon determining that the printing data is provided from outside the network printing control apparatus 28, the printing data is received from outside in operation 72. As described above, the printing data may be received from a server (not shown) outside the network printing control apparatus 28. In other words, printing data may be received from external Internet servers providing weather, news, etc. However, upon determining that the printing data is provided from inside the network printing control apparatus 28, instead of outside of the apparatus 28, the printing data is received from the inside in operation 74. For example, the printing data may be internally provided in the form of files within the network printing control apparatus 28. After operation 72 or 74, the externally or internally provided printing data is transmitted to the desired UPnP printers 20, 22, 24, 26 in operation 76.

Referring to Figure 6, the apparatus includes an identification information registering unit 90 and a printer monitoring unit 92. The apparatus shown in Figure 6 performs the method illustrated in Figure 1 and corresponds to the network printing control apparatus 28, illustrated in Figure 2.

In operation 10 shown in Figure 1, the identification information registering unit 90 determines and registers identification information identifying each printer that supports UPnP among the printers 20 through 26 connected to the apparatus via the network 14. For example, the identification information registering unit 90 outputs a printer type inquiry signal to inquire whether each of the printers 20 through 26 is a UPnP printer through an output terminal OUT1. Then, each of the printers 20 through 26 receives the printer type inquiry signal and generates a printer type signal indicative of the printer type. The identification information registering unit 90 determines whether each of the printers 20 through 26 is a UPnP printer based on the printer type signals received from the printers 20 through 26 through an input terminal IN1, requests identification information from printers determined as being a UPnP printer through the output terminal OUT1, receives the identification information from the UPnP printers through the input terminal IN1 and registers the received identification information.

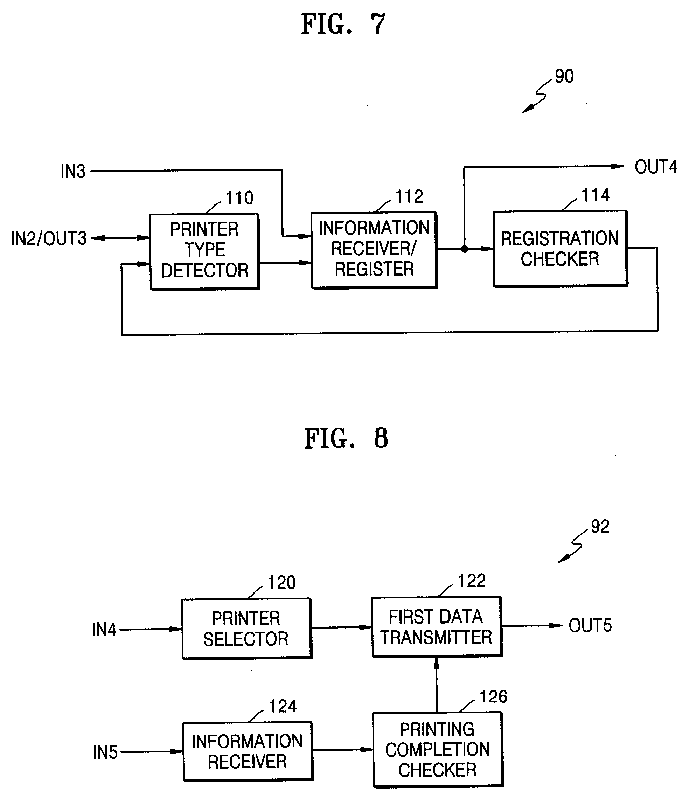

Referring to Figure 7, the identification information registering unit 90 includes a printer type detector 110, an information receiver/register 112 and a registration checker 114.

The identification information registering unit 90 shown in Figure 7 performs operation 10 shown in Figure 3. For example, to perform operation 30, the printer type detector 110 detects whether each of the printers 20 through 26, connected via the network 14, is a UPnP printer in response to a first control signal received from the registration checker 114 and outputs a detection result as a second control signal to the information receiver/register 112. In other words, in an initial state, the printer type detector 110 detects whether the printers 20 through 26, connected via the network 14, are UPnP printers and outputs a detection result as the second control signal. However, in a normal state after the initial state, the printer type detector 110 detects types of printers other than the printers whose type have been detected upon determining that identification information of all of the UPnP printers has not been completely registered based on the first control signal. In other words, the printer type detector 110 outputs the printer type inquiry signal requesting printers 20 through 26 whether the printers are UPnP printers through an output terminal OUT3. Then, each of the printers 20 through 26 generates a printer type signal to indicate its type in response to the printer type inquiry signal. Then, the printer type detector 110 detects whether each of the printers 20 through 26 is a UPnP printer based on the printer type signal received from each of the printers 20 through 26 through an input terminal IN2 and outputs a detection result as the second control signal.

In operations 32 and 34, the information receiver/register 112 receives identification information from UPnP printers in response to the second control signal received from the printer type detector 110, registers the received identification information, and outputs the registered identification information to the printer monitoring unit 92 through an output terminal OUT4. In other words, upon determining that a printer is a UPnP printer, based on the second control signal, the information receiver/register 112 receives identification information from the UPnP printer through an input terminal IN3 and registers the received identification information.

In operation 36, upon receiving from the information receiver/register 112 a registration completion signal to indicate that identification information registration has been completed, the registration checker 114 checks whether identification information of all UPnP printers, connected to the network 14, has been registered and outputs a check result as the first control signal to the printer type detector 110.

In operation 12 shown in Figure 1, the printer monitoring unit 92 shown in Figure 6 monitors the UPnP printers 20, 22, 24, 26 using the registered identification information, received from the identification information registering unit 90, and transmits the printing data to the desired printers among the monitored UPnP printers 20, 22, 24, 26 through an output terminal OUT2.

Referring to Figure 8, the printer monitoring unit 92 includes a printer selector 120, a first data transmitter 122, an information receiver 124 and a printing completion checker 126.

The printer monitoring unit 92 shown in Figure 8 performs operations 50, 54, 56 and 58 shown in Figure 4. The printer monitoring unit 92 includes only the printer selector 120 and the first data transmitter 122 shown in Figure 8 to perform operations 50 and 54 shown in Figure 4. Accordingly, to perform operation 50, the printer selector 120 selects the UPnP printer 20, 22, 24, 26 to which the printing data is sent. The printer selector 120 is implemented by an operation unit (not shown) that is operated by a user to generate a printing request signal to identify a printer 20, 22, 24, 26 to print the printing data. The printer selector 120 determines whether a printer 20, 22, 24, 26, identified by the printing request signal, has been registered, based on the identification information received from the identification information registering unit 90 through an input terminal IN4. Upon determining that the printer identified by the printing request signal has been registered, the printer selector 120 outputs the printing request signal to the first data transmitter 122. However, upon determining that the printer 20, 22, 24, 26, identified by the printing request signal, has not been registered, the printer selector 120 does not output the printing request signal to the first data transmitter 122. In operation 54, the first data transmitter 122 recognizes the selected UPnP printer 20, 22, 24, 26, identified by the printing request signal received from the printer selector 120, and transmits the printing data to the identified UPnP printer 20, 22, 24, 26 through an output terminal OUT5.

To further perform operations 56 and 58, the printer monitoring unit 92 includes an information receiver 124 and a printing completion checker 126, as shown in Figure 8. Accordingly, to perform operation 56, the information receiver 124 receives at least one type of information, regarding whether printing data has been completely transmitted or whether the printing data has been completely printed, from the selected UPnP printer 20, 22, 24, 26 through an input terminal IN5 and outputs the received information to the printing completion checker 126. To perform operation 58, the printing completion checker 126 checks whether the selected UPnP printer 20, 22, 24, 26 has correctly completed printing, based on the information received from the information receiver 124, and outputs a check result as a third control signal to the first data transmitter 122. Then, upon determining that the selected UPnP printer 20, 22, 24, 26 has not correctly completed printing based on the third control signal, the first data transmitter 122 retransmits the printing data only to the UPnP printer 20, 22, 24, 26 that has not completed printing correctly through an output terminal OUT5.

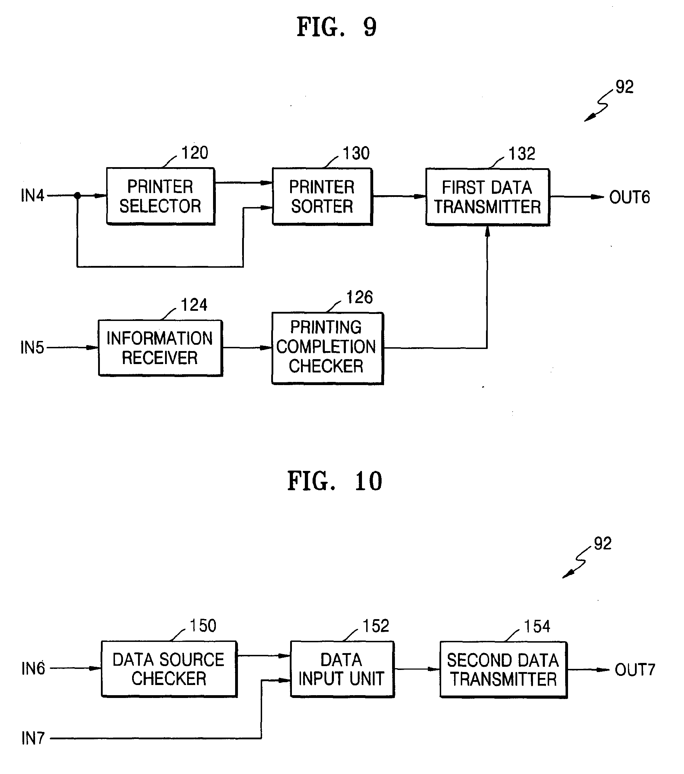

Referring to Figure 9, the printer monitoring unit 92 includes a printer selector 120, a printer sorter 130, a first data transmitter 132, an information receiver 124 and a printing completion checker 126.

The printer monitoring unit 92 performs operations 50 through 58 shown in Figure 4. The printer selector 120, the information receiver 124 and the printing completion checker 126, shown in Figure 9, respectively perform the same functions as the printer selector 120, the information receiver 124 and the printing completion checker 126 shown in Figure 8, and thus descriptions thereof will be omitted.

In operation 52, the printer sorter 130 of the printer monitoring unit 92 sorts out only UPnP printers 20, 22, 24, 26 that request reception of printing data from among the UPnP printers selected by the printer selector 120, using registered identification information, received from the identification information registering unit 90 through an input terminal IN4 and outputs information to indicate the sorted-out UPnP printers 20, 22, 24, 26 to the first data transmitter 132. To perform operation 54, the first data transmitter 132 transmits the printing data only to the UPnP printers 20, 22, 24, 26 sorted out by the printer sorter 130 through an output terminal OUT6.

Referring to Figure 10, the printer monitoring unit 92 includes a data source checker 150, a data input unit 152, and a second data transmitter 154. The printer monitoring unit 92, shown in Figure 10, performs operation 12 shown in Figure 5.

In operation 70, the data source checker 150 checks whether printing data is provided from outside or inside the apparatus and outputs a check result as a fourth control signal to the data input unit 152. For this operation, the data source checker 150 may receive data source information that indicates whether the printing data is received from outside or inside the apparatus from an operation unit (not shown) operated by a user and may generate the fourth control signal corresponding to the received data source information.

In operation 72 or 74, the data input unit 152 receives the printing data from outside or inside the apparatus through an input terminal IN7 in response to the fourth control signal received from the data source checker 150. For example, upon determining that the printing data is provided from outside the apparatus based on the fourth control signal, the data input unit 152 receives the printing data from outside through the input terminal IN7. However, upon determining, based on the fourth control signal, that the printing data is provided from inside the apparatus, the data input unit 152 receives the printing data from inside through the input terminal IN7.

In operation 76, the second data transmitter 154 transmits the printing data, received from the data input unit 152, to the desired UPnP printers 20, 22, 24, 26 through an output terminal OUT7.

An apparatus to control network printing according to the present invention is controlled using a computer program, which is stored in a computer-readable recording medium. For example, the computer program performs operations to determine and register identification information to identify UPnP printers among a plurality of printers, monitor the UPnP printers using the registered identification information, and selectively transmit printing data to a desired printer among the UPnP printers.

A computer program to register the identification information according to an aspect of the present invention performs operations to determine whether a printer connected with a network is a UPnP printer; receives identification information from the UPnP printer upon determining that the printer is a UPnP printer; registers the identification information; determines whether identification information of all UPnP printers connected with the network has been registered; and re-determines whether a printer is a UPnP printer upon determining that the identification information of all UPnP printers has not been registered.

A computer program to transmit the printing data according to an aspect of the present invention comprises: selecting UPnP printers to which the printing data is to be transmitted and transmitting the printing data to selected UPnP printers. According to an aspect of the present invention, the computer program to transmit printing data comprises: sorting out only UPnP printers that request reception of the printing data from among the selected UPnP printers using the registered identification information. Accordingly, the computer program transmits the printing data only to the sorted-out UPnP printers. Further, the computer program to transmit printing data further comprises: receiving at least one type of information among information regarding whether the printing data has been completely transmitted and information regarding whether the printing data has been completely printed from each of the selected or sorted-out UPnP printers, determining whether printing has been normally completed using the received information, and retransmitting the printing data only to UPnP printers determined as not completing printing normally according to a determination result.

A computer program to monitor the UPnP printers according to an aspect of the present invention comprises: determining whether the printing data is provided from outside or inside, receiving the printing data from outside upon determining that the printing data is provided from outside, receiving printing data from inside upon determining that the printing data is provided from inside, and transmitting the printing data received from outside or inside to the desired UPnP printers.

While described in terms of selectively transmitting the printing data to the UPnP printers, it is understood that the network control apparatus can further broadcast the printing data to non-UPnP printers such as using the broadcast method discussed above in relation to Japanese Published Patent Application No. 2000-207157, the disclosure of which is incorporated by reference.

As described above, according to an aspect of the present invention, printing data with the same or different information is transmitted to individual printers connected with a network so that various types of information are easily and quickly transmitted in a home, an office building, public spaces, and/or other networked environments. In addition, because the printing data is to be retransmitted to the printers connected with the network when transmission to a particular printer or a printing operation of the particular printer fails, the printing data is retransmitted to the particular printer. Further, an aspect of the present invention allows the printers connected with the network to be synthetically managed and allows a state of each printer to be detected. Particularly, printers are sorted out, and the printing data is transmitted only to the sorted-out particular printers. Moreover, identification information of the printers connected with the network is automatically registered without additional equipment and a user's input, thereby increasing the user's convenience and decreasing expenses to register printers. In addition, the printing data is not transmitted to UPnP printers that do not request reception of the printing data.

## Claims

1. A method to control printing operations of printers connected with a network, comprising:
determining and registering identification information to identify universal plug-and-play printers that support universal plug-and-play among the printers connected with the network; and
monitoring the universal plug-and-play printers using the registered identification information, and selectively transmitting printing data to desired universal plug-and-play printers among the universal plug-and-play printers.

2. The method according to claim 1, wherein the determining and registering identification information comprises:
determining which of a plurality of the printers connected with the network are universal plug-and-play printers;
receiving the identification information from universal plug-and-play printers upon determining that the printers among the plurality of the printers connected with the network is universal plug-and-play compliant;
registering the identification information received from the universal plug-and-play printers; and
determining whether identification information of all the universal plug-and-play printers connected with the network has been registered, and redetermining which of the plurality of printers connected with the network is a universal plug-and-play printer upon determining that the identification information of all of the universal plug-and-play printers has not been registered.

3. The method according to claim 1, wherein the monitoring the universal plug-and-play printers and selectively transmitting printing data to desired universal plug-and-play printers comprises:
selecting universal plug-and-play printers to which the printing data is to be transmitted; and
transmitting the printing data to the selected universal plug-and-play printers.

4. The method according to claim 3, wherein the monitoring the universal plug-and-play printers and selectively transmitting printing data to desired universal plug-and-play printers further comprises:
sorting out the universal plug-and-play printers that request reception of the printing data from among the universal plug-and-play printers to which the printing data is selectively transmitted using the registered identification information, wherein the transmitting the printing data includes transmitting the printing data only to the sorted-out universal plug-and-play printers such that the universal plug-and-play printers not requesting the printing data do not receive the printing data.

5. The method according to claim 3, wherein the monitoring the universal plug-and-play printers and selectively transmitting printing data to desired universal plug-and-play printers further comprises:
receiving at least one type of information among information regarding whether the printing data has been completely transmitted and information regarding whether the printing data has been completely printed from each of the selected universal plug-and-play printers; and
determining whether the printing data has been completely printed using the received information, and transmitting the printing data to the selected universal plug-and-play printers upon determining that the printing data has not been completely printed, and
the transmitting the printing data to the selected universal plug-and-play printers upon determining includes transmitting the printing data only to the universal plug-and-play printers in which the printing data have not been completely printed.

6. The method according to claim 1, wherein the printing data of the individual universal plug-and-play printers includes different information.

7. The method according to claim 1, wherein the monitoring the universal plug-and-play printers and selectively transmitting printing data to desired universal plug-and-play printers further comprises:
determining whether the printing data is provided from outside and/or inside an apparatus performing the method;
receiving the printing data from outside the network upon determining that the printing data is provided from outside the apparatus performing the method;
receiving the printing data from inside the network upon determining that the printing data is provided from inside the apparatus performing the method; and
transmitting the printing data received from outside and/or inside the apparatus performing the method to the desired universal plug-and-play printers.

8. An apparatus to control printing operations of printers connected with a network, comprising:
an identification information registering unit to determine and register identification information to identify universal plug-and-play printers that support universal plug-and-play among the printers connected with the network; and
a printer monitoring unit to monitor the universal plug-and-play printers using the registered identification information received from the identification information registering unit and selectively transmit printing data to desired universal plug-and-play printers among the universal plug-and-play printers.

9. The apparatus according to claim 8, wherein the identification information registering unit comprises:
a printer type detector to detect whether each printer connected with the network is the universal plug-and-play printer in response to a first control signal and to output a detection result as a second control signal;
an information receiver/register to receive, for each universal plug-and-play printer, the identification information from the universal plug-and-play printer in response to the second control signal and to register the received identification information; and
a registration checker to check whether identification information of all the universal plug-and-play printers connected with the network has been registered and to output a check result as the first control signal.

10. The apparatus according to claim 8, wherein the printer monitoring unit comprises:
a printer selector to select the universal plug-and-play printers to which the printing data is to be transmitted; and
a first data transmitter to transmit the printing data to the selected universal plug-and-play printers and to not transmit the printing data to non-selected ones of the universal plug-and-play printers.

11. The apparatus according to claim 10, wherein the printer monitoring unit further comprises:
a printer sorter to sort out only universal plug-and-play printers that request reception of the printing data from among the selected universal plug-and-play printers using the registered identification information, wherein the first data transmitter transmits the printing data only to the sorted-out universal plug-and-play printers.

12. The apparatus according to claim 10, wherein the printer monitoring unit further comprises:
an information receiver to receive at least one type of information among information regarding whether the printing data has been completely transmitted and information regarding whether the printing data has been completely printed from each of the selected universal plug-and-play printers; and
a printing completion checker to check whether the printing data has been completely printed using the information received from the information receiver and to output a check result as a third control signal, and
the first data transmitter to transmit the printing data only to universal plug-and-play printers in which the printing data has not been completely printed in response to the third control signal.

13. The apparatus according to claim 8, wherein the printer monitoring unit comprises:
a data source checker to identify whether the printing data is provided from one of outside and inside the apparatus and to output a check result as a fourth control signal;
a data input unit to receive the printing data from corresponding one of the outside and inside the apparatus in response to the fourth control signal; and
a second data transmitter to transmit the printing data received from the data input unit to the desired universal plug-and-play printers.

14. A computer-readable recording medium to store at least one computer program for a method to control an apparatus to control printing operations of printers connected with a network, the method comprising:
determining and registering identification information to identify universal plug-and-play printers that support universal plug-and-play among the printers connected with the network; and
monitoring the universal plug-and-play printers using the registered identification information and selectively transmitting printing data to desired universal plug-and-play printers among the universal plug-and-play printers.

15. The computer-readable recording medium according to claim 14, wherein the determining and registering identification information that identifies universal plug-and-play printers comprises:
determining which of a plurality of the printers connected with the network are universal plug-and-play printers;
receiving the identification information from the universal plug-and-play printers upon determining that the printers among the plurality of the printers connected with the network is universal plug-and-play compliant;
registering the identification information received from the universal plug-and-play printers; and determining whether identification information of all the universal plug-and-play printers connected with the network has been registered, and redetermining which of the plurality of printers connected with the network is a universal plug-and-play printer upon determining that the identification information of all of the universal plug-and-play printers has not been registered.

16. The computer-readable recording medium according to claim 14, wherein the monitoring the universal plug-and-play printers and selectively transmitting printing data to desired universal plug-and-play printers comprises:
selecting the universal plug-and-play printers to which the printing data is to be transmitted; and
transmitting the printing data to the selected universal plug-and-play printers.

17. The computer-readable recording medium according to claim 16, wherein the monitoring the universal plug-and-play printers and selectively transmitting printing data to desired universal plug-and-play printers further comprises:
sorting out only the universal plug-and-play printers that request reception of the printing data from among the universal plug-and-play printers to which the printing data is selectively transmitted using the registered identification information, wherein transmitting the printing data includes transmitting the printing data only to the sorted-out universal plug-and-play printers such that non-selected universal plug-and-play printers do not receive the printing data.

18. The computer-readable recording medium according to claim 16, wherein the monitoring the universal plug-and-play printers and selectively transmitting printing data to desired universal plug-and-play printers further comprises:
receiving at least one type of information among information regarding whether the printing data has been completely transmitted and information regarding whether the printing data has been completely printed from each of the selected universal plug-and-play printers; and
determining whether the printing data has been completely printed using the received information, and transmitting the printing data to the selected universal plug-and-play printers upon determining that the printing data has not been completely printed, and
the transmitting the printing data to the selected universal plug-and-play printers includes transmitting the printing data only to universal plug-and-play printers in which the print data has not been completely printed.

19. The computer-readable recording medium according to claim 14, wherein the monitoring the universal plug-and-play printers and selectively transmitting printing data to desired universal plug-and-play printers comprises:
determining whether the printing data is provided from one of outside and inside the apparatus;
receiving the printing data from outside the network upon determining that the printing data is provided from outside the apparatus;
receiving the printing data from inside the network upon determining that the printing data is provided from inside the apparatus; and
transmitting the printing data received from outside and/or inside the apparatus to the desired universal plug-and-play printers.

20. The method according to claim 1, wherein the identification information of the printers is set by a user.

21. The method according to claim 1, wherein the identification information is registered when the universal plug-and-play printers are connected with the network.

22. The apparatus according to claim 8, wherein the identification information registering unit registers the identification information when the universal plug-and-play printers are connected with the network.

23. The apparatus according to claim 8, wherein the apparatus is connected with the network having the printers.

24. The apparatus according to claim 23, wherein the identification information registering unit registers the identification information when the apparatus to control printing operations of printers is connected with the network.

25. The method according to claim 1, wherein the printing data comprises different information that is selectively transmitted to the corresponding universal plug-and-play printers.

26. The method according to claim 1, wherein the printing data has the same information that is transmitted to the corresponding universal plug-and-play printers.

27. The method according to claim 3, further comprising:
transmitting data from each universal plug-and-play printer to indicate whether the printing data is to be transmitted.

28. The method according to claim 27, wherein the printing data is transmitted to the universal plug-and-play printers based on the transmitted data from each universal plug-and-play printer.

29. A method to control printing operations of printers connected with a network, comprising:
registering identification information of each printer among the printers; and controlling each printer based on the registered identification information, wherein printing data is selectively transmitted to a desired printer among the printers.

30. The method according to claim 29, wherein the identification information of the printers is changed by a user.

31. The method according to claim 29, wherein the identification information is registered when each printer is connected with the network.

32. The method according to claim 31, wherein the identification information is registered using a discovery function of a plug-and-play architecture.

33. The method according to claim 29, wherein the printers are monitored based on the registered identification information.

34. The method according to claim 29, wherein the printing data is transmitted to all the printers.

35. An apparatus to control printing operations of printers connected with a network, comprising:
a storage unit to store identification information to identify printers that support a predetermined network protocol among the printers connected with the network; and
a controller to control the supported printers based on the registered identification information.

36. The apparatus according to claim 35, wherein printing data is selectively transmitted to desired printers among the supported printers.

37. A method of printing a document using a plurality of network-connected printers (20, 22, 24, 26), the method being **characterised by** obtaining availability information from the printers (20, 22, 24, 26) indicating whether they are available for printing, sending the document data to the printers (20, 22, 24, 26) which have indicated their availability and the use of UPnP printers (20, 22, 24, 26).
